(19) Europäisches Patentamt
European Patent Office
Office européen des brevets

(11) **EP 2 910 937 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
***G01N 23/203*** (2006.01)

(21) Anmeldenummer: **15152620.9**

(22) Anmeldetag: **27.01.2015**

(54) **Verfahren zur Identifizierung einer kristallographischen Kandidatenphase eines Kristalls**

Method for identifying a crystallographic candidate phase of a crystal

Procédé d'identification d'une phase de candidat cristallographique d'un cristal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2014 DE 102014203090**

(43) Veröffentlichungstag der Anmeldung:
**26.08.2015 Patentblatt 2015/35**

(73) Patentinhaber: **Bruker Nano GmbH**
**12489 Berlin (DE)**

(72) Erfinder: **Schwager, Dr. Thomas**
**10247 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**US-A1- 2004 011 958**

- **ZAEFFERER ET AL: "On the formation mechanisms, spatial resolution and intensity of backscatter Kikuchi patterns", ULTRAMICROSCOPY, ELSEVIER, AMSTERDAM, NL, Bd. 107, Nr. 2-3, 22. Dezember 2006 (2006-12-22), Seiten 254-266, XP005813656, ISSN: 0304-3991, DOI: 10.1016/J.ULTRAMIC.2006.08.007**
- **SRISUKHUMBOWORNCHAI N ET AL: "Large magnetostriction in directionally solidified FeGa and FeGaAl alloys", JOURNAL OF APPLIED PHYSICS, AMERICAN INSTITUTE OF PHYSICS, US, Bd. 90, Nr. 11, 1. Dezember 2001 (2001-12-01), Seiten 5680-5688, XP012053642, ISSN: 0021-8979, DOI: 10.1063/1.1412840**

**Beschreibung**

Die vorliegende Erfindung betrifft ein Verfahren zur Identifizierung einer kristallographischen Kandidatenphase eines Kristalls. Die Erfindung betrifft ferner ein dazugehöriges Computerprogramm und ein computerlesbares Speichermedium.

**Stand der Technik**

Electron backscatter diffraction (EBSD) ist eine kristallografische Technik, mit der die Struktur von Kristallen analysiert werden kann. Ein Elektronenstrahl wird dabei an den Atomen der zu vermessenden Probe gestreut und das resultierende Beugungsbild erfasst. Beispiele für die Anwendung von EBSD zur Kristallanalyse sind US 2004/0011958 A1; S. Zaefferer, Ultramicroscopy 107 (2007), 254 - 266 und N. Srisukhumbowornchai et al., J. Appl. Phys., 90 (2001), 5680 - 5688 zu entnehmen. Bei der Unterscheidung kristallographisch ähnlicher Phasen (Kandidatenphasen) hat man häufig das Problem, dass zwei oder mehr Kandidatenphasen ein Pattern, das heißt das charakteristische Diffraktionsmuster eines Kristalls, gleich gut indizieren. So lässt sich zum Beispiel in einem Pattern die in Tabelle 1 dargestellte Lösung für Austenit (FCC-Eisen) und Ferrit (BCC-Eisen) finden.

Tabelle 1: Indizierungslösung bei FCC und BCC-Eisen

| Band | FCC-Index | BCC-Index |
|------|-----------|-----------|
| 1 | (220) | (110) |
| 2 | (220) | (110) |
| 3 | (200) | (200) |
| 4 | (242) | (121) |
| 5 | (422) | (211) |
| 6 | (422) | (211) |
| 7 | (242) | (121) |
| 8 | (111) | (222) |

Die Bänder sind hier grob nach der gemessenen Intensität sortiert. Das Band mit der Nummer 1 hat also die größte Intensität, während das Band mit der Nummer 8 die niedrigste Intensität aufweist. Offensichtlich beschreiben beide Indizierungslösungen das Pattern gleich gut. Die Anzahl der Bänder ist gleich und die Bandlagen sind gleich. Lediglich die Breite der vorhergesagten Bänder ist unterschiedlich. Da die Bandbreite schwer zu messen ist, ist es recht kompliziert, auf Grundlage der Bandbreiten bei der Identifikation eine zuverlässige Unterscheidung zu treffen.

Es ist daher eine Aufgabe der vorliegenden Erfindung, ein Verfahren bereitzustellen, welches eine eindeutigere und zuverlässigere Identifizierung einer kristallographischen Kandidatenphase eines Kristalls ermöglicht.

**Offenbarung der Erfindung**

Erfindungsgemäß wird ein Verfahren zur Identifizierung einer kristallographischen Kandidatenphase eines Kristalls in einem EBSD-Beugungsbild zur Verfügung gestellt, welches die folgenden Schritte umfasst: Sortieren und Indizieren der Bänder des Beugungsbildes in der Reihenfolge abfallender Intensität. Bereitstellen von Indizes von im Ergebnis der EBSD-Bildaufnahme zu erwartenden Beugungsbändern von Kandidatenphasen in einer Datenbank, wobei alle der bereitgestellten Indizes jeweils einer Kandidatenphase zugeordnet sind. Identifizierung der erwarteten Bänder mit den im Beugungsbild gemessenen Bändern für jede Kandidatenphase. Vergleich der Intensitäten von Bändern des vermessenen Beugungsbildes mit Intensitäten, welche für die im Ergebnis der EBSD-Bildaufnahme zu erwartenden Beugungsbänder der Kandidatenphasen, deren Indizes in der Datenbank abgelegt sind, vorhergesagt wurden.

Der Vorteil des erfindungsgemäßen Verfahrens liegt darin, dass mit selbigem auf einfache Art und Weise eine eindeutige und zuverlässige Identifikation von Phasen beziehungsweise Kandidatenphasen ermöglicht wird. Mit einem EBSD-System ist dabei ein System gemeint, welches zur Aufnahme und Auswertung von Elektronenrückstreubildern in der Lage ist. Das EBSD-System kann zum Beispiel in einem Rasterelektronenmikroskop oder in einem Transmissionselektronenmikroskop oder aber auch in einer beliebigen sonstigen Anlage realisiert sein. Ferner wird unter dem Beugungsbild das Rückstreuelektronenbeugungsbild, also das electron backscatter pattern, welches auch als Kikuchi-Pattern bezeichnet wird, verstanden.

Die Messung beziehungsweise Ermittlung der Intensitäten von Kikuchi-Bändern ist aus dem Stand der Technik hinlänglich bekannt und erfolgt im Wesentlichen im Rahmen einer Bildauswertung, zum Beispiel wie nachfolgend angegeben.

Zunächst werden Beugungsbilder zur Vermessung von Bandlagen nach einigen üblichen Aufbereitungsschritten (Hintergrundabzug, Kontrastverbesserung, etc) einer Radon- oder Hough-Transformation unterzogen. Dabei werden lineare Features im Beugungsbild in scharfe helle Peaks im transformierten Bild gewandelt. Auch sehr breite Beugungsbänder lassen sich auf diese Weise auswerten. Statt isolierter heller Punkte im transformierten Bild erhält man bei auf Hough-Transformationen basierenden Ansätzen kleinräumige, helle Strukturen (in manchen der folgenden Quellen auch "Butterflies" genannt). Die Intensitäten dieser Punkte beziehungsweise dieser Strukturen im transformierten Bild, dem sogenannten Hough-Bild, werden regelmäßig als grobes Maß für die Intensität der Kikuchi-Bänder herangezogen. Im weiteren Verlauf der Bildauswertung werden die hellsten Peaks auf dem Hough-Bild betrachtet und die zugehörigen Bandlagen, welche sich aus der Position des Peaks auf dem Hough-Bild ergeben, bestimmt. Da mit den hellsten Peaks begonnen wird, ergibt sich eine grobe Intensitätssortierung der gemessenen Beugungsbänder.

Dies ist beispielsweise in der Arbeit von Niels Christian Krieger Lassen, "Automated Determination of Crystal Orientations from Electron Backscattering Patterns", IMM-DTU, Technical University of Denmark, 1994, auf Seite 98 beschrieben. Hier wird explizit erwähnt, dass die Höhe der Hough-Peaks als Maß für die Intensität der einzelnen Beugungsbänder verwandt werden kann.

Weitere Möglichkeiten der Intensitätsbestimmung von Beugungsbändern lassen sich beispielsweise dem Artikel von Robert A. Schwarzer, "Automated Crystal Orientation Measurements by backscatter Kikuchi diffraction", Dept. of Physics, Clausthal University of Technology, Germany, S. 166, entnehmen.

Auch in dem Artikel von N. C. Krieger Lassen, "Automatic high-precision measurements of the location and width of Kikuchi bands in electron backscatter diffraction patterns", Journal of Microscopy, Vol. 190, Pt 3, Juni 1998, Seite 375 - 391 sowie in dem Artikel von Robert A. Schwarzer und Johann Sukkau, "Automated Evaluation of Kikuchi Patterns by Means of Radon and Fast Fourier Transformation, and Verification by an Artificial Neural Network", Advanced Engineering Materials, 5, No. 8, 2003, Seite 601 - 603, ist das zuvor beschriebe Verfahren zur Bildauswertung näher dargelegt.

Bevorzugt erfolgt die Bereitstellung der Indizes der im Ergebnis der EBSD-Bildaufnahme zu erwartenden Beugungsbänder von Kandidatenphasen in einer Datenbank, aus der von einem Anwender eine Vorauswahl getroffen wird. Mit anderen Worten ausgedrückt erfolgt bevorzugt, beispielsweise durch einen Anwender des Verfahrens, eine Voranalyse des untersuchten Kristalls, um infrage kommende kristallographische Kandidatenphasen zu identifizieren. Ferner bevorzugt werden für jede ausgewählte Kandidatenphase infrage kommende Beugungsbänder ausgewählt und deren Indizes in einer Liste bereitgestellt. Ferner bevorzugt werden die vorhergesagten Intensitäten aus physikalischen Modellen theoretisch bestimmt und/oder aus Daten anderer Messmethoden mit weiteren Modellen vorhergesagt. Des Weiteren bevorzugt kommt bei derartigen Messmethoden eine Röntgenbeugung zur Anwendung. Ferner bevorzugt werden in der Datenbank nicht alle Bänder beziehungsweise nicht die Indizes aller Bänder abgelegt, sondern aus einer Gruppe symmetrieäquivalenter Bänder nur jeweils eines. Bevorzugt werden die nicht abgelegten Bänder mit Kenntnis der Kristallsymmetrie generiert.

Ferner sind den bereitgestellten Indizes der im Ergebnis der EBSD-Bildaufnahme erwarteten Beugungsbänder jeweils entsprechend der für das jeweilige Beugungsband vorhergesagten Intensität Intensitätsränge zugeordnet, wobei dem Index des Beugungsbandes, für welches die größte Intensität vorhergesagt wird, der höchste Intensitätsrang zugeordnet ist. Da die Bänder eines Beugungsbildes durch das EBSD-System in der Reihenfolge nach ihrer Intensität im Beugungsbild sortiert bestimmt werden, kann die Vergleichbarkeit dieser bestimmten Bänder mit den erwarteten Beugungsbändern von Kandidatenphasen, deren Indizes in der Datenbank abgelegt sind, durch die Zuordnung der genannten Intensitätsränge zu den Indizes einer jeweiligen Kandidatenphase signifikant vereinfacht werden. Ferner ist dem in der Datenbank abgelegten Index des Beugungsbandes der zweitgrößten Intensität der zweithöchste Intensitätsrang zugeordnet und so fort. Bevorzugt sind den in der Datenbank abgelegten Indizes von Beugungsbändern gleicher Intensität gleiche Intensitätsränge zugeordnet.

Ferner werden die Indizes der Bänder des vermessenen Beugungsbildes mit den in der Datenbank abgelegten Indizes der im Ergebnis der EBSD-Bildaufnahme erwarteten Beugungsbänder der Kandidatenphasen hinsichtlich ihrer Intensität verglichen, indem diejenigen in der Datenbank abgelegten Indizes, welche jeweils einer Kandidatenphase zugeordnet sind, je Kandidatenphase entsprechend der Reihenfolge der bestimmten Indizes angeordnet werden und für den Vergleich die den in der Datenbank abgelegten Indizes zugeordneten Intensitätsränge herangezogen werden. Bei einer derartigen Ausführungsform des Verfahrens werden die in der Datenbank abgelegten Indizes der Beugungsbänder der für den Vergleich beziehungsweise für die Identifizierung infrage kommenden Kandidatenphasen hinsichtlich ihrer Orientierung in der Reihenfolge angeordnet, in der die Indizes der Bänder des Beugungsbildes der mittels des EBSD-Systems zu identifizierenden kristallographischen Kandidatenphase bestimmt beziehungsweise ausgegeben werden. Es ist im Anschluss daran anhand einer Betrachtung der Reihenfolge der den Indizes einer Kandidatenphase zugeordneten Intensitätsränge sehr einfach festzustellen, ob es sich bei der Kandidatenphase um die mit dem EBSD-System zu identifizierende kristallographische Kandidateriphase handelt.

Ferner erfolgt der Vergleich mit den in der Datenbank abgelegten Indizes, indem die in der Reihenfolge der bestimmten Bänder angeordneten, in der Datenbank abgelegten Indizes, welche jeweils einer Kandidatenphase zugeordnet sind, so untereinander paarweise vertauscht werden, dass die den Indizes der Kandidatenphase zugeordneten Intensitätsränge abfallend sortiert sind, wobei der höchste Intensitätsrang den ersten Wert in der Intensitätsrangfolge bildet und die Anzahl der zur Herstellung dieser Intensitätsrangfolge benötigten Vertauschungen aufeinanderfolgender Indizes erfasst wird. Es werden dabei nur Vertauschungen benachbarter Indizes zugelassen. Es können also jeweils lediglich aufeinander folgende Indizes miteinander vertauscht werden. Mit anderen Worten ausgedrückt, werden die in der Datenbank abgelegten Indizes je Kandidatenphase entsprechend ihrer Intensitätsränge sortiert, wobei der Index des Beugungsbandes der höchsten Intensität an erster Stelle steht und der Index des Beugungsbandes der geringsten Intensität an letzter Stelle steht. Es wird dabei die Anzahl der für die Herstellung dieser Intensitätsrangfolge benötigten Vertauschungen der in der Datenbank abgelegten Indizes als Gütemaß, genannt RankScore festgehalten, wobei der RankScore einer Kandidatenphase stets der geringsten Anzahl an Vertauschungen entspricht, die für die in der Datenbank abgelegten Indizes einer Kandidatenphase benötigt werden, um selbige entsprechend der Intensitätsrangfolge zu ordnen. Anhand dieses RankScores kann sehr einfach bestimmt werden, ob eine zu identifizierende kristallographische Kandidatenphase mit einer Kandidatenphase, deren Indizes in der Datenbank abgelegt sind, identifizierbar ist. Alternativ können auch lediglich die Intensitätsränge der jeweils zugehörigen Indizes vertauscht werden und entsprechend der obigen Ausführung die Anzahl der jeweils paarweisen Vertauschungen als RankScore festgehalten werden.

Ferner werden die Indizes der zu identifizierenden Kandidatenphase mit den in der Datenbank bereitgestellten Indizes der im Ergebnis der EBSD-Bildaufnahme erwarteten Beugungsbänder mindestens zweier Kandidatenphasen, die die gleichen Bänder indizieren, verglichen, und wird die Kandidatenphase mit der kleinsten Anzahl an benötigten Vertauschungen mit der zu identifizierenden Kandidatenphase identifiziert. Ist die Anzahl an für die Herstellung der Intensitätsrangfolge benötigten Vertauschungen bei einer Kandidatenphase, deren Indizes in der Datenbank abgelegt sind, sehr klein oder gleich Null, so ist die Wahrscheinlichkeit sehr hoch, dass es sich bei dieser Kandidatenphase um die zu identifizierende Kandidatenphase handelt, da die Intensitäten der Bänder im Beugungsbild dieser Kandidatenphase mit den vorhergesagten Intensitäten der Bänder der zu identifizierenden Kandidatenphase gut übereinstimmen. Somit ermöglicht das erfindungsgemäße Verfahren eine eindeutige Identifizierung einer Kandidatenphase.

Ferner wird ein Computerprogramm zur Verfügung gestellt, welches es einem Datenverarbeitungssystem ermöglicht, das erfindungsgemäße Verfahren auszuführen, sobald das Computerprogramm auf den Speicher des Datenverarbeitungssystems geladen ist. Mit einem derartigen Computerprogramm ist es möglich das Verfahren von einem Computer ausführen zu lassen, was Zeit und Kosten einspart und ferner effizienter als bei einer Ausführung von Menschenhand erfolgen kann.

Des Weiteren wird ein computerlesbares Speichermedium bereitgestellt, auf welchem ein Computerprogramm gespeichert ist, welches es einem Datenverarbeitungssystem ermöglicht, das erfindungsgemäße Verfahren auszuführen, sobald das Computerprogramm auf den Speicher des Datenverarbeitungssystems geladen ist. Bei einer derartigen Ausführung kann das erfindungsgemäße Computerprogramm beispielsweise auf das computerlesbare Speichermedium zugreifen, auf welchem neben dem Programm eine Datenbank abgelegt sein kann, welche eine Vielzahl an zu den Beugungsbändern von Kandidatenphasen zugehörigen Indizes samt der diesen zugeordneten Intensitätsränge umfasst.

Weitere vorteilhafte Weiterbildungen der Erfindung sind in den Unteransprüchen angegeben oder können der nachfolgenden Beschreibung entnommen werden.

**Ausführungsformen der Erfindung,**

Im Folgenden wird ein Ausführungsbeispiel eines erfindungsgemäßen Verfahrens anhand eines Beispiels beschrieben, bei welchem eine zu identifizierende kristallographische Kandidatenphase mit entweder Austenit, also FCC-Eisen oder mit Ferrit, also BCC-Eisen identifiziert werden soll. Bei der untersuchten Probe handelt es sich in diesem Ausführungsbeispiel rein beispielhaft um Ferrit. Zum Zweck der Identifizierung der Probenphase wird das Beugungsbild durch Bestrahlung der Probe mit einem Elektronenstrahl mittels eines EBSD-Systems erzeugt. Das Beugungsbild enthält charakteristische Bänder, deren Lage vermessen wird. Für jede der beiden Kandidatenphasen werden die gemessenen Bänder indiziert, das heißt es werden die Millerindizes der Netzebenen bestimmt, die die Bänder erzeugen. Die Indizes sind für beide Kandidatenphasen unterschiedlich. Die Indizes werden in der Reihenfolge R der gemessenen Bandintensitäten, beginnend mit dem Band der höchsten Intensität sortiert ausgegeben. Das EBSD-System ist in diesem Ausführungsbeispiel rein beispielhaft in einem Rasterelektronenmikroskop realisiert. Es kann aber auch in einer anderen Anlage oder als alleinstehendes, eigenständiges System realisiert sein. In der folgenden Tabelle 2 ist das Ergebnis der Indizierung des Beugungsbildes mittels des EBSD-Systems dargestellt, bei welchem 8 Bänder identifiziert wurden, welche wie bereits erwähnt von dem EBSD-System in der Reihenfolge R nach ihrer Intensität im Beugungsbild sortiert bestimmt wurden. Während das Band 1 im Beugungsbild am hellsten war, handelte es sich bei dem Band 8 um das dunkelste der gemessenen Bänder im Beugungsbild. Abweichend von dem vorliegenden Beispiel können auch wesentlich mehr Bänder im Beugungsbild vorhanden sein.

Tabelle 2: Ergebnis der Auswertung des Beugungsbildes mit der beispielhaft gewählten Kandidatenphase Ferrit

| Band | Ferrit |
|------|--------|
| 1<br>2<br>3<br>4<br>5<br>6<br>7<br><br><br>8 | $\left.\begin{array}{l}(110)\\(\bar{1}10)\\(200)\\(121)\\(21\bar{1})\\(211)\\(\bar{1}21)\\(222)\end{array}\right\} \mathrm{R}$ |

Im Rahmen des erfindungsgemäßen Verfahrens werden die 8 Bänder des Beugungsbildes also in der Reihenfolge R abfallender Intensität sortiert und indiziert. Es werden ferner Indizes von in dem Ergebnis der EBSD-Bildaufnahme zu erwartenden Beugungsbändern von für die Identifikation der untersuchten Kandidatenphase infrage kommenden Kandidatenphasen in einer Datenbank bereitgestellt. Die Indizes der Beugungsbänder der infrage kommenden Kandidatenphasen sind also in einer Datenbank abgelegt, wobei alle Indizes jeweils einer infrage kommenden Kandidatenphase zugeordnet sind. Die Auswahl der infrage kommenden Beugungsbänder von Kandidatenphasen erfolgt dabei in diesem Ausführungsbeispiel des Verfahrens rein beispielhaft durch einen Anwender, welcher eine Analyse des untersuchten Kristalls durchführt. In diesem Ausführungsbeispiel werden für die erwarteten Beugungsbänder, deren Indizes in der Datenbank abgelegt sind, Intensitäten beziehungsweise Intensitätswerte vorhergesagt, welche das jeweilige Beugungsband bei einer EBSD-Untersuchung in einem Beugungsbild aufweisen würde. Die vorhergesagten Intensitäten beziehungsweise Intensitätswerte werden also den jeweils zugehörigen Indizes der erwarteten Beugungsbänder zugeordnet. Die Vorhersage der Intensitäten erfolgt in diesem Ausführungsbeispiel rein beispielhaft anhand von in der Literatur bekannten beziehungsweise gegebenen Werten. In anderen Ausführungsbeispielen werden die für die Vorhersage verwandten Intensitäten beziehungsweise Intensitätswerte theoretisch aus physikalischen Modellen ermittelt. In anderen Ausführungsbeispielen erfindungsgemäßer Verfahren kann die Vorhersage von Intensitäten beziehungsweise Intensitätswerten auch lediglich ungefähr erfolgen. In diesem Ausführungsbeispiel werden den in der Datenbank abgelegten Indizes entsprechend der jeweils für ein zugehöriges Beugungsband vorhergesagten Intensität Intensitätsränge zugeordnet. Die Zuordnung von Intensitätsrängen zu den Indizes erfolgt dabei also in diesem Ausführungsbeispiel jeweils entsprechend der vorhergesagten Intensität des den Indizes jeweils zugehörigen Beugungsbandes innerhalb des Beugungsbildes der Kandidatenphase, welcher die jeweiligen Indizes zugeordnet sind. Dem Index des erwarteten Beugungsbandes der größten Intensität wird der höchste Intensitätsrang zugeordnet. Bei der Kandidatenphase des FCC-Eisens handelt es sich bei den {111}-Bändern um die hellsten Bänder. Ihnen wird daher der höchste Intensitätsrang "1" zugeordnet. Dann folgen die {200}, {220}, {311}, {331}, die {420} und die {422}-Bänder. Bänder höherer Ordnung mit gleicher Lage wie bereits betrachtete Bänder werden nicht berücksichtigt. Den {422}-Bändern wird der niedrigste Intensitätsrang "7" zugeordnet Bei der Kandidatenphase des BCC-Eisen ist die Intensitätsrangfolge {110}, {200}, {211}, {310}, {222} und {321}. Während es sich bei den {110}-Bändern um die hellsten Bänder handelt, denen daher der Intensitätsrang "1" zugeordnet wird, handelt es sich bei den {321}-Bändern um die Bänder der niedrigsten Intensität, welche daher den Intensitätsrang "6" erhalten. Bändern vergleichbarer Intensität werden in diesem Beispiel gleiche Intensitätsränge zugeordnet.

In diesem Ausführungsbeispiel werden die vorhergesagten Intensitäten der Beugungsbänder der in der Datenbank abgelegten Indizes mit den für die Beugungsbänder der untersuchten Kandidatenphase gemessenen verglichen. Dazu wird zu jedem Bandindex der sich aus der Vorhersage der Intensität ergebende Intensitätsrang notiert, was in Tabelle 3 dargestellt ist. Wie der konkrete Bandindex ist auch der Intensitätsrang für die betrachtete Kandidatenphase spezifisch. In diesem Ausführungsbeispiel des Verfahrens werden diejenigen in der Datenbank abgelegten Indizes, welche jeweils einer Kandidatenphase zugeordnet sind, je Kandidatenphase entsprechend der Reihenfolge R der bestimmten Indizes der untersuchten Kandidatenphase angeordnet, was ebenfalls in Tabelle 3 geschehen ist. Die Anordnung erfolgt in diesem Ausführungsbeispiel rein beispielhaft hinsichtlich der Orientierung der den Indizes zugeordneten erwarteten Beugungsbänder im jeweiligen Beugungsbild einer Kandidatenphase, sodass gleich orientierte Beugungsbänder in einer Zeile stehen. Ferner werden die Indizes entsprechend der jeweils zugehörigen Bandnummer nummeriert.

Tabelle 3

| Band | FCC-Index | Intensitätsrang$_{FCC}$ | BCC-Index | Intensitätsrang$_{BCC}$ |
|------|-----------|-------------------------|-----------|-------------------------|
| 1 | (220) | 3 | (110) | 1 |
| 2 | (220) | 3 | (110) | 1 |
| 3 | (200) | 2 | (200) | 2 |
| 4 | (242) | 7 | (121) | 3 |
| 5 | (422) | 7 | (211) | 3 |
| 6 | (422) | 7 | (211) | 3 |
| 7 | (242) | 7 | (121) | 3 |
| 8 | (111) | 1 | (222) | 5 |

Die Indizes der Kandidatenphasen sind also entsprechend der Reihenfolge R geordnet und nummeriert. Die Indizes von Beugungsbändern gleicher Lage stehen somit phasenübergreifend an gleicher Stelle innerhalb der Reihenfolge ihrer jeweils zugehörigen Indizes und tragen die gleiche Bandnummer. Bei einer passenden Kandidatenphase sind die Intensitätsränge mit der Bandnummer aufsteigend sortiert. Bänder hoher Intensität wurden passend mit einer hohen, Bänder mit niedriger Intensität wurden passend mit niedriger Intensität vorhergesagt. Im Beispiel sagt die Kandidatenphase Ferrit, also BCC-Eisen, deren Indizes in der mit "BCC-Index" überschriebenen Spalte aufgelistet sind, die richtige Intensitätsrangfolge voraus.

Die Bewertung der Intensitätsrangfolge der jeweiligen Kandidatenphasen erfolgt, indem übereinander- beziehungsweise untereinander aufeinanderfolgend angeordnete Indizes der Kandidatenphase solange paarweise miteinander vertauscht werden, bis die den Indizes der Kandidatenphase zugeordneten Intensitätsränge in einer abfallenden Intensitätsrangfolge sortiert sind. Dabei bildet der höchste Intensitätsrang, in diesem Ausführungsbeispiel in Tabelle 3 mit einer "1" gekennzeichnet, den ersten Wert in der abfallenden Intensitätsrangfolge. Die Anzahl der zur Herstellung dieser abfallenden Intensitätsrangfolge benötigten Vertauschungen der Indizes untereinander, welche hier als RankScore bezeichnet ist, wird erfasst.

In diesem Ausführungsbeispiel wird dabei stets diejenige Kandidatenphase mit der kleinsten Anzahl an notwendigen Vertauschungen, welche also den geringsten RankScore aufweist, mit der zu identifizierenden Kandidatenphase identifiziert, In diesem Ausführungsbeispiel sind bei der Kandidatenphase des FCC-Eisens neun Vertauschungen notwendig, um die durch die Intensitäten der Bänder des Beugungsbildes vorgegebene abfallende Intensitätsrangfolge herbeizuführen. Der RankScore der Kandidatenphase des FCC-Eisens beträgt also "9". Der erste Vertauschungsschritt könnte beispielsweise die Vertauschung der Indizes (-242) und (111) sein. Weitere sechs Vertauschungen sind notwendig, um den Index des achten Bandes (111) an die erste Stelle zu bringen. Danach sind weitere zwei Vertauschungen nötig um das Band (200) an die zweite Stelle zu bringen. Bei der Kandidatenphase des BCC-Eisens ist hingegen keine Vertauschung vorzunehmen, da die Intensitätsränge bereits in einer abfallenden Intensitätsrangfolge angeordnet sind. Der RankScore der Referenz-Kandidatenphase des BCC-Eisens beträgt also "0". Somit wird die zu identifizierende Kandidatenphase mit BCC-Eisen identifiziert.

In diesem Ausführungsbeispiel wird die zu identifizierende Kandidatenphase zum einfacheren Verständnis mit den Indizes von Beugungsbändern lediglich zweier Kandidatenphasen verglichen. Es können allerdings auch erfindungsgemäße Verfahren ausgeführt werden, bei welchen eine zu identifizierende Kandidatenphase mit den Indizes einer großen Vielzahl an Kandidatenphasen verglichen wird, beispielsweise mit mehr als hundert oder einer noch größeren Zahl an Kandidatenphasen.

**Patentansprüche**

1.  Verfahren zur Identifizierung einer kristallographischen Kandidatenphase eines Kristalls in einem EBSD-Beugungsbild, umfassend die Schritte:

    (i) Sortieren und Indizieren der Bänder eines EBSD-Beugungsbildes in der Reihenfolge (R) abfallender Intensität;
    (ii) Bereitstellen von Indizes von im Ergebnis der EBSD-Bildaufnahme zu erwartenden Beugungsbändern von Kristallographischen kandidatenphasen in einer Datenbank, wobei alle der bereitgestellten Indizes jeweils einer Kristallographischen Kandidatenphase zugeordnet sind;
    (iii) Identifizierung der erwarteten Bänder mit den im EBSD-Beugungsbild gemessenen Bändern für jede Kristallographische Kandidatenphase;

(iv) Vergleich der Intensitäten von Bändern des EBSD-Beugungsbildes mit Intensitäten, welche für die im Ergebnis der EBSD-Bildaufnahme zu erwartenden Beugungsbänder der Kristallographischen Kandidatenphasen, deren Indizes in der Datenbank abgelegt sind, vorhergesagt wurden, wobei

den bereitgestellten Indizes der im Ergebnis der EBSD-Bildaufnahme erwarteten Beugungsbänder jeweils entsprechend der für das jeweilige Beugungsband vorhergesagten Intensität Intensitätsränge zugeordnet sind, wobei dem Index des Beugungsbandes, für welches die größte Intensität vorhergesagt wird, der höchste Intensitätsrang zugeordnet ist,

die Indizes der Bänder des EBSD-Beugungsbildes mit den in der Datenbank abgelegten Indizes der im Ergebnis der EBSD-Bildaufnahme erwarteten Beugungsbänder der Kristallographischen Kandidatenphasen hinsichtlich ihrer Intensität verglichen werden, indem diejenigen in der Datenbank abgelegten Indizes, welche jeweils einer Kristallographischen Kandidatenphase zugeordnet sind, je Kristallographischer Kandidatenphase entsprechend der Reihenfolge (R) der indizierten Bänder angeordnet werden und für den Vergleich die den in der Datenbank abgelegten Indizes zugeordneten Intensitätsränge herangezogen werden,

der Vergleich mit den in der Datenbank abgelegten Indizes erfolgt, indem die in der Reihenfolge (R) der indizierten Bänder angeordneten, in der Datenbank abgelegten Indizes, welche jeweils einer, Kristallographischen Kandidatenphase zugeordnet sind, so untereinander paarweise vertauscht werden, dass die den Indizes der Kristallographischen Kandidatenphase zugeordneten Intensitätsränge abfallend sortiert sind, wobei der höchste Intensitätsrang den ersten Wert in der Intensitätsrangfolge bildet, und die Anzahl der zur Herstellung dieser Intensitätsrangfolge benötigten Vertauschungen aufeinanderfolgender Indizes erfasst wird,

und die Indizes der zu identifizierenden Kristallographischen Kandidatenphase mit den in der Datenbank bereitgestellten Indizes der im Ergebnis der EBSD-Bildaufnahme erwarteten Beugungsbänder mindestens zweier Kristallographischer Kandidatenphasen, die die gleichen Bänder indizieren, verglichen werden, und die Kristallographische Kandidatenphase mit der kleinsten Anzahl an benötigten Vertauschungen mit der zu identifizierenden Kristallographischen Kandidatenphase identifiziert wird.

2. Computerprogramm, welches es einem Datenverarbeitungssystem ermöglicht das Verfahren nach Anspruch 1 auszuführen, sobald das Computerprogramm auf den Speicher des Datenverarbeitungssystems geladen ist.

3. Computerlesbares Speichermedium, auf welchem ein Computerprogramm nach Anspruch 2 gespeichert ist.

**Claims**

1. A method for identifying a crystallographic candidate phase of a crystal in an EBSD diffraction pattern, comprising the steps of:

(i) Sorting and indexing of the bands of an EBSD diffraction pattern in order (R) of decreasing intensity;

(ii) Providing of indices of diffraction bands of crystallographic candidate phases, which are to be expected as a result of the EBSD pattern acquisition, in a database, wherein all the indices provided are, in each case, assigned to a crystallographic candidate phase;

(iii) Identification of the expected bands with the bands measured in the EBSD diffraction pattern for each crystallographic candidate phase;

(iv) Comparison of the intensities of bands of the EBSD diffraction pattern with intensities which were predicted for the diffraction bands of the crystallographic candidate phases, which are to be expected as a result of the EBSD pattern acquisition, the indices of said crystallographic candidate phases being stored in the database, wherein

intensity ranks are, in each case, assigned to the provided indices of the expected diffraction bands as a result of the EBSD pattern acquisition according to the intensity predicted for the respective diffraction band, wherein the highest intensity rank is assigned to the index of the diffraction band for which the greatest intensity is predicted, the indices of the bands of the EBSD diffraction pattern are compared with the indices of the expected diffraction bands of the crystallographic candidate phases as a result of the EBSD pattern acquisition, which are stored in the EBSD database, in terms of their intensity, in that those indices stored in the database, each of which is assigned to a crystallographic candidate phase, are arranged for each crystallographic candidate phase according to the order (R) of the indicated bands, and the intensity ranks assigned to the indices stored in the database are used for comparison,

the comparison with the indices stored in the database is carried out in that the indices stored in the database, arranged in the order (R) of the indicated bands, each of which is assigned to a crystallographic candidate phase, are permutated with one another in pairs such that the intensity ranks assigned to the indices of the crystallographic candidate phase are sorted in descending order, wherein the highest intensity rank constitutes the first value in the intensity ranking, and the number of permutations of consecutive indices required to produce this intensity ranking is recorded,

and the indices of the crystallographic candidate phase to be identified are compared with the indices of the expected diffraction bands of at least two crystallographic candidate phases as a result of the EBSD pattern acquisition, which are provided in the database, which crystallographic candidate phases indicate the same bands, and the crystallographic candidate phase is identified with the lowest number of required permutations with the crystallographic candidate phase to be identified.

2. A computer program which makes it possible for a data processing system to carry out the method according to Claim 1, as soon as the computer program is loaded into the memory of the data processing system.

3. A computer-readable storage medium on which a computer program according to Claim 2 is stored.


**Revendications**

1. Procédé d'identification d'une phase de candidat cristallographique d'un cristal dans un modèle de diffraction EBSD, comprenant les étapes suivantes :

    (i) classement et indexation des bandes d'une image de diffraction EBSD dans l'ordre (R) d'intensité décroissante ;
    (ii) fourniture d'indices de bandes de diffraction à attendre dans le résultat de l'enregistrement d'image EBSD de phases de candidat cristallographiques dans une base de données, tous les indices fournis étant affectés à une phase de candidat cristallographique ;
    (iii) identification des bandes attendues avec les bandes mesurées dans l'image de diffraction EBSD pour chaque phase de candidat cristallographique ;
    (iv) comparaison des intensités de bandes de l'image de diffraction EBSD avec des intensités qui ont été prédites pour les bandes de diffraction des phases de candidat cristallographiques à attendre dans le résultat de l'enregistrement d'image EBSD dont les indices sont stockés dans la base de données,

    des rangs d'intensité étant affectés aux indices fournis des bandes de diffraction attendues dans le résultat de l'enregistrement d'image EBSD respectivement en fonction de l'intensité prédite pour la bande de diffraction respective, le rang d'intensité le plus élevé étant affecté à l'indice de la bande de diffraction pour laquelle la plus grande intensité a été prédite,

    les indices des bandes de l'image de diffraction EBSD étant comparés avec les indices, stockés dans la base de données EBSD, des bandes de diffraction, attendues dans le résultat de l'enregistrement d'image EBSD, des phases de candidat cristallographiques en ce qui concerne leur intensité, par le fait que les indices stockés dans la base de données qui sont affectés respectivement à une phase de candidat cristallographique sont, pour chaque phase de candidat cristallographique, disposés en fonction de l'ordre (R) des bandes indexées, et les rangs d'intensité affectés aux indices stockés dans la base de données étant utilisés pour la comparaison ,

    la comparaison avec les indices stockés dans la base de données s'effectuant par le fait que les indices, disposés dans l'ordre (R) des bandes indexées et stockés dans la base de données, qui sont affectés respectivement à une phase de candidat cristallographique sont permutés entre eux par paires de telle sorte que les rangs d'intensité affectés aux indices de la phase de candidat cristallographique sont classés dans l'ordre décroissant, le rang d'intensité le plus élevé formant la première valeur dans l'ordre de rangs d'intensité, et le nombre de permutations d'indices qui se suivent nécessaires à la production de cet ordre de rangs d'intensité étant détecté,

    et les indices de la phase de candidat cristallographique à identifier étant comparés avec les indices, fournis dans la base de données, des bandes de diffraction, attendues dans le résultat de l'enregistrement d'image EBSD, d'au moins deux phases de candidat cristallographiques qui indexent les mêmes bandes, et la phase de candidat cristallographique avec le plus petit nombre de permutations nécessaires étant identifiée avec la phase de candidat cristallographique à identifier.

2. Programme informatique qui permet à un système de traitement de données de réaliser le procédé selon la revendication 1 dès que le programme informatique est chargé dans la mémoire du système de traitement de données.

3. Support de mémoire lisible par ordinateur sur lequel est enregistré un programme informatique selon la revendication 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040011958 A1

**In der Beschreibung aufgeführte Nicht-Patentliteratur**

- **S. ZAEFFERER.** *Ultramicroscopy,* 2007, vol. 107, 254-266
- **N. SRISUKHUMBOWORNCHAI et al.** *J. Appl. Phys.,* 2001, vol. 90, 5680-5688
- Automated Determination of Crystal Orientations from Electron Backscattering Patterns. **NIELS CHRISTIAN KRIEGER LASSEN.** IMM-DTU. Technical University of Denmark, 1994, 98
- **ROBERT A. SCHWARZER.** Automated Crystal Orientation Measurements by backscatter Kikuchi diffraction. Dept. of Physics, Clausthal University of Technology, 166
- Automatic high-precision measurements of the location and width of Kikuchi bands in electron backscatter diffraction patterns. **N. C. KRIEGER LASSEN.** Journal of Microscopy. Juni 1998, vol. 190, 375-391
- **ROBERT A. SCHWARZER ; JOHANN SUKKAU.** Automated Evaluation of Kikuchi Patterns by Means of Radon and Fast Fourier Transformation, and Verification by an Artificial Neural Network. *Advanced Engineering Materials,* 2003, vol. 5 (8), 601-603